# EUROPEAN PATENT APPLICATION

(11) **EP 4 541 537 A1**
(43) Date of publication of application: **23.04.2025**
(21) Application number: 24168546.0
(22) Date of filing: 04.04.2024
(51) Int. Cl.: B26F 1/40, B21D 28/02, B21D 28/24, B26F 1/44

(54) **NOTCHING APPARATUS FOR SECONDARY BATTERY**

(30) Priority: 19.10.2023 KR 20230140492
(71) Applicant: Samsung SDI Co., Ltd., Yongin-si, Gyeonggi-do 17084 (KR)
(72) Inventor: JANG, Young Jin, 16678 Suwon-si (KR); CHOI, Jung Hun, 16678 Suwon-si (KR); LEE, Jin Hong, 16678 Suwon-si (KR); KWON, Sung Jin, 16678 Suwon-si (KR)
(74) Representative: Marks & Clerk LLP

(57) **Abstract**

A notching apparatus for a secondary battery includes a lower body configured to support an electrode plate which comprises a first area coated with an active material and a second area not coated with the active material and is transferred in a first direction, an upper body installed to vertically move above the lower body, a die installed on the lower body and arranged to face the second area, a punch hole formed by passing through the die and comprising a first punch hole, a second punch hole, and a third punch hole, which are sequentially arranged in the first direction, and a punch installed on the upper body, inserted into the punch hole as the upper body moves downward, and configured to cut the second area.

## Description

### BACKGROUND

### 1. Field

The present disclosure relates to a notching apparatus for a secondary battery.

### 2. Description of the Related Art

Generally, with the recent rapid spread of electronic devices that use batteries, such as mobile phones, laptop computers, and electric vehicles, the demand for secondary batteries with high energy density and high capacity is rapidly increasing. Thus, research and development for improvement of the performance of lithium secondary batteries is actively underway.

A lithium secondary battery is a battery including a positive electrode and a negative electrode, each containing an active material capable of intercalation and deintercalation of lithium ions, and an electrolyte solution, and the lithium secondary battery produces electrical energy due to oxidation and reduction reactions when the lithium ions are intercalated into and deintercalated from the positive electrode and the negative electrode.

In order to manufacture the positive electrode and the negative electrode, a process of notching a continuous electrode plate of which one or both sides are coated with an electrode active material at unit intervals is performed. The notching process is generally performed by notching a portion of an electrode sheet using a puncher.

The above-described information disclosed in the technology that forms the background of the present disclosure is intended to improve understanding of the background of the present disclosure, and thus may include information that does not constitute the related art.

### SUMMARY OF THE INVENTION

Embodiments of the present disclosure are directed to providing a notching apparatus for a secondary battery that can prevent defects such as sticking or burrs from occurring when an electrode plate is punched.

These and other aspects and features of the present disclosure will be described in or will be apparent from the following description of some example embodiments of the present disclosure.

According to one or more embodiments, a notching apparatus for a secondary battery includes: a lower body configured to support an electrode plate which comprises a first area coated with an active material and a second area not coated with the active material, the electrode plate to be transferred in a first direction, an upper body installed on and/or configured to vertically move above the lower body, a die on (e.g., installed on) the lower body and arranged to face the second area, a punch hole passing through (e.g. formed by passing through) the die and comprising a first punch hole, a second punch hole, and a third punch hole, which are sequentially arranged in the first direction, and a punch on (e.g., installed on) the upper body, insertable into the punch hole as the upper body moves downward, and configured to cut the second area.

The die may include a die body fixed to the lower body, a first extension extending from the die body and comprising a first surface, a second extension extending from the die body and comprising a second surface arranged to face the first surface in the first direction, a first tab support arranged between the first extension and the second extension, and a second tab support arranged between the first extension and the second extension and spaced apart from the first tab support in the first direction.

Widths of the first tab support and the second tab support, which are parallel to the first direction, may be the same.

Longitudinal directions of the first extension, the second extension, the first tab support, and the second tab support may extend in a second direction intersecting the first direction, and lengths of the first tab support and the second tab support may be smaller than lengths of the first extension and the second extension.

The first punch hole may be arranged between the first extension and the first tab support, the second punch hole may be arranged between the first tab support and the second tab support, and the third punch hole may be arranged between the second tab support and the second extension.

Longitudinal directions of the first punch hole, the second punch hole, and the third punch hole may be arranged parallel to a second direction intersecting the first direction, and a length of the first punch hole may be smaller than a length of the third punch hole.

A width of the third punch hole parallel to the first direction may be greater than a width of the first punch hole parallel to the first direction.

The upper body may be moved downward after the electrode plate is transferred as much as a distance (e.g., a set distance) in the first direction.

The distance (e.g., the set distance) may be smaller than a gap between the first punch hole and the third punch hole.

A surface of the first punch hole may be in contact with the first surface, a surface of the third punch hole may be in contact with the second surface, and the distance (e.g., the set distance) may be smaller than a gap between the first surface and the second surface.

The second tab support may be arranged to face the second surface in the first direction and may include a third surface in contact with another surface of the third punch hole, and the distance (e.g., the set distance) may be greater than a gap between the first surface and the third surface.

The punch hole may further include a notching hole extending from the third punch hole in a direction parallel to the second direction.

A surface of the notching hole may be in contact with the second surface.

A width of the notching hole may become (e.g., may be formed to become) narrower in the second direction.

The electrode plate may further include a third area not coated with the active material and arranged on a side opposite to the second area, and the notching apparatus may further include a sub die on (e.g., installed on) the lower body and arranged to face the third area, a sub punch hole passing through (e.g., formed by passing through) the sub die, and a sub punch on (e.g., installed on) the upper body, inserted into the sub punch hole as the upper body moves downward, and configured to cut the third area.

In accordance with one or more embodiments of the present disclosure, different sections of a second area of an electrode plate cut by a punch hole and a punch partially overlap, such that a consumption efficiency of the electrode plate may be improved and cutting quality may be further improved.

In accordance with one or more embodiments of the present disclosure, a size of a portion pre-cut by a first punch hole is reduced in the second area facing a third punch hole, and both ends of the second area facing the third punch hole are maintained in a state of being connected to the remaining second area such that it is possible to prevent or substantially prevent a sticking phenomenon from occurring when the punch is operated.

However, the effects obtainable through the present disclosure are not limited to the above effects, and other technical effects that are not mentioned will be clearly understood by those skilled in the art from the following description of the present disclosure.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a schematic perspective view illustrating a configuration of a notching apparatus for a secondary battery according to an embodiment of the present disclosure;
FIG. 2 is a schematic perspective cut-away view illustrating the configuration of the notching apparatus for a secondary battery according to an embodiment of the present disclosure;
FIG. 3 is a schematic cross-sectional view illustrating the configuration of the notching apparatus for a secondary battery according to an embodiment of the present disclosure;
FIGS. 4 and 5 are schematic plan views illustrating the configuration of the notching apparatus for a secondary battery according to an embodiment of the present disclosure;
FIG. 6 is a schematic perspective view illustrating the configurations of a die, a punch hole, and a punch according to an embodiment of the present disclosure;
FIG. 7 is a perspective view illustrating the configurations of the die, the punch hole, and the punch according to an embodiment of the present disclosure from a viewpoint different from FIG. 6;
FIG. 8 is a schematic plan view illustrating the configuration of the die according to an embodiment of the present disclosure; and
FIGS. 9 to 13 are schematic diagrams illustrating operations of the notching apparatus for a secondary battery according to an embodiment of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should instead be interpreted as having a meaning consistent with the technical idea of the present disclosure and based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

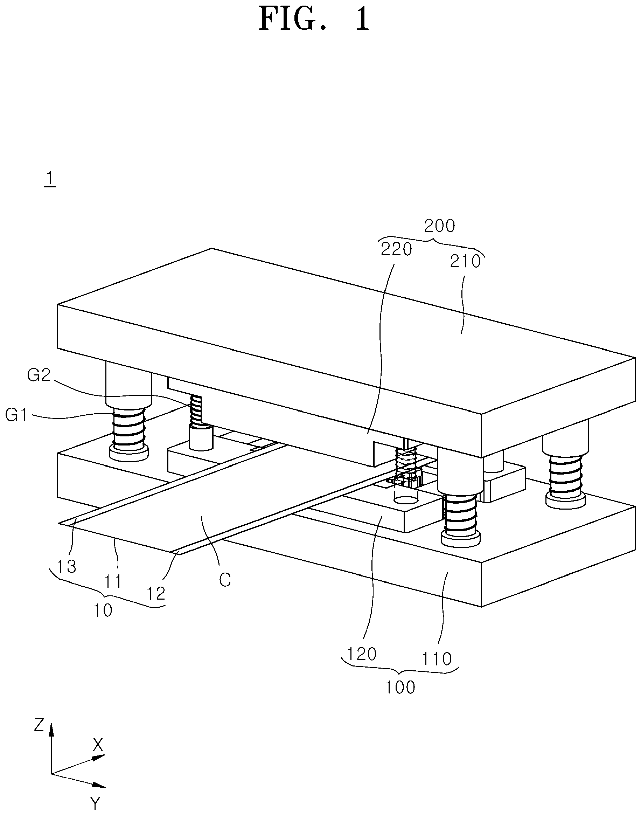

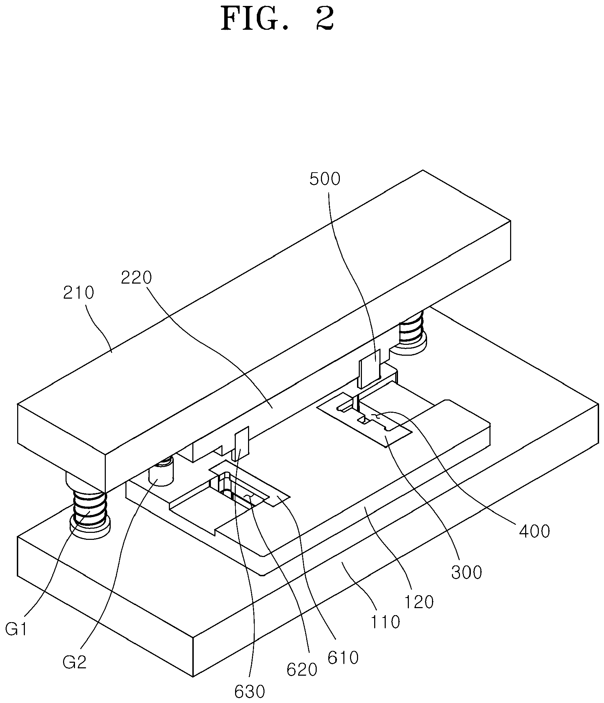

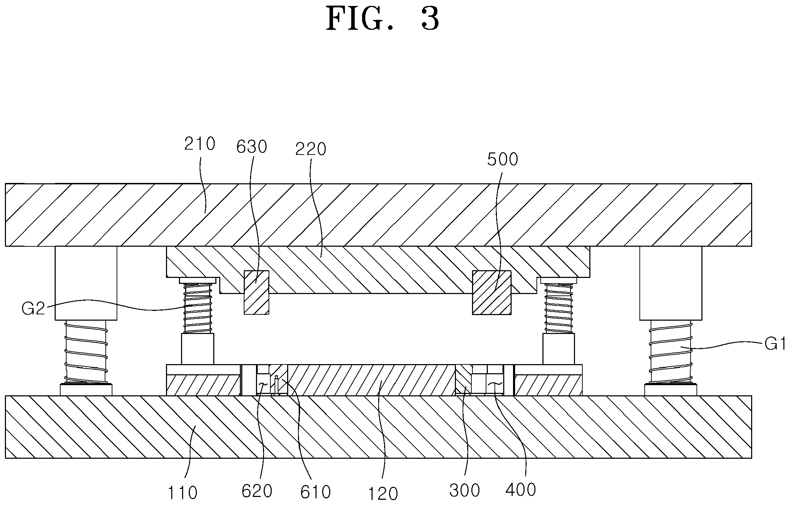

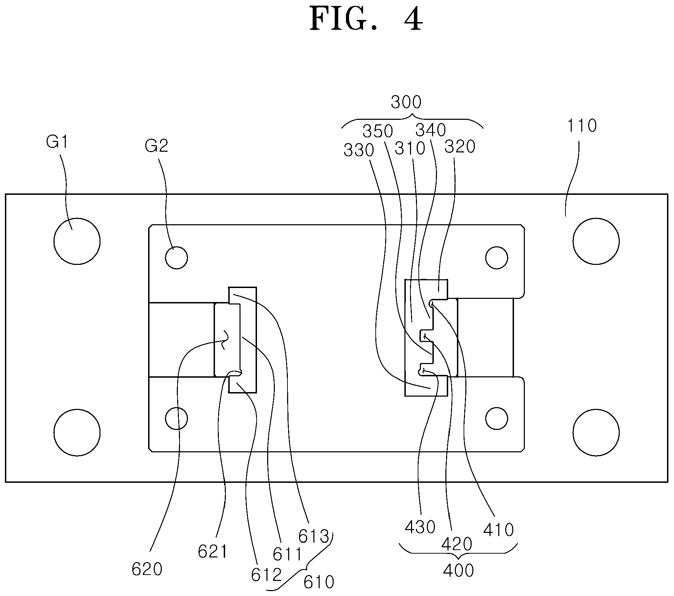

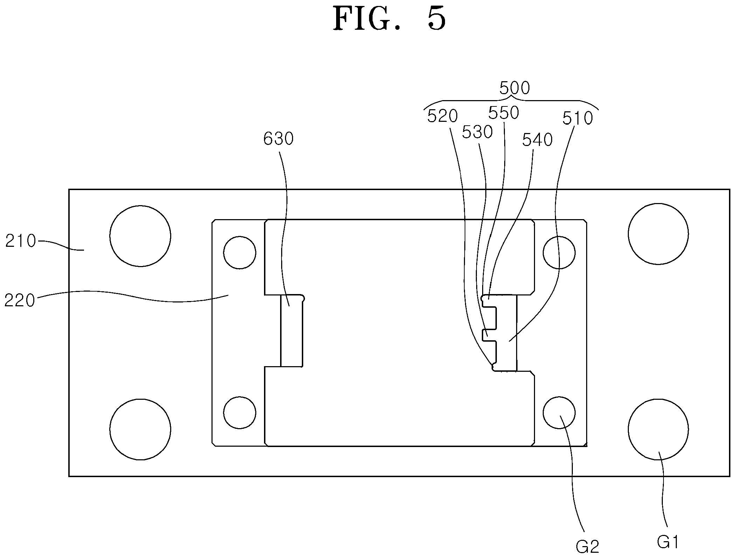

FIG. 1 is a schematic perspective view illustrating a configuration of a notching apparatus for a secondary battery according to an embodiment of the present disclosure, FIG. 2 is a schematic perspective cut-away view illustrating the configuration of the notching apparatus for a secondary battery according to an embodiment of the present disclosure, FIG. 3 is a schematic perspective view illustrating a configuration of the notching apparatus for a secondary battery according to an embodiment of the present disclosure, and FIGS. 4 and 5 are schematic plan views illustrating the configuration of the notching apparatus for a secondary battery according to an embodiment of the present disclosure.

Referring to FIGS. 1 to 5, the notching apparatus for a secondary battery according to the present embodiment includes a lower body 100, an upper body 200, a die 300, a punch hole 400, and a punch 500.

The lower body 100 forms a lower exterior of the notching apparatus and may serve as a component for supporting the upper body 200 and the die 300, which will be described below.

The lower body 100 may include a first lower body 110 and a second lower body 120.

The first lower body 110 may be formed to have a rigid body shape with a substantially quadrangular cross-section. The first lower body 110 may be fixed to the ground or a separate structure (not shown) through any of various coupling methods, such as welding, bolting, and/or fit-coupling.

The second lower body 120 is seated on the first lower body 110 and may provide a space in which the die 300, which will be described below, is mounted. A cross-sectional area of the second lower body 120 may be formed to be smaller than a cross-sectional area of the first lower body 110. The second lower body 120 may be fixed to the first lower body 110 through any of various coupling methods such as welding, bolting, and/or fit-coupling. An upper surface of the second lower body 120 may have a flat shape parallel to an X-Y plane based on FIG. 1.

The specific shapes of the first lower body 110 and the second lower body 120 are not limited to those shown in FIGS. 1 to 5, and design changes to various other shapes are possible.

The lower body 100 may support an electrode plate 10 transferred in a first direction. Here, the first direction may be any one of directions parallel to an X-axis based on FIG. 1.

The electrode plate 10 may be formed to have a foil shape with a thin thickness. The electrode plate 10 may be made of an electrically conductive material such as copper, a copper alloy, nickel, a nickel alloy, aluminum, or an aluminum alloy. A longitudinal direction of the electrode plate 10 may continuously extend in the first direction. A lower surface of the electrode plate 10 may be arranged to face an upper surface of the second lower body 120. The lower surface of the electrode plate 10 may be arranged in direct contact with the upper surface of the second lower body 120 or may be arranged to be spaced a distance (e.g., a predetermined distance) from the upper surface of the second lower body 120.

Both ends of the electrode plate 10 may be wound on or unwound from a transfer roller (not shown) and may be transferred in the first direction. In this case, the electrode plate 10 may be transferred (e.g., gradually transferred) as much as a distance (e.g., a set distance) in the first direction. For example, an operation in which the electrode plate 10 is transferred as much as a certain distance (e.g., the set distance) in the first direction and then the transfer of the electrode plate 10 is stopped for a certain time (e.g., a set time) may be repeatedly performed. Specific details of the certain distance (e.g., the set distance) the electrode plate 10 is transferred will be described below.

The electrode plate 10 may include a first area 11 and a second area 12.

The first area 11 may be an area coated with an active material C among the area (e.g., the entire area) of electrode plate 10. As an example, the first area 11 may be a central area coated with the active material C among the entire area of electrode plate 10.

The active material C may be a positive electrode active material capable of reversible intercalation and deintercalation of lithium or a negative electrode active material capable of reversible intercalation and deintercalation of lithium ions. The positive electrode active material may include one or more among a composite oxide of lithium and a metal selected from cobalt, manganese, nickel, and a combination thereof. The negative electrode active material may include crystalline carbon, amorphous carbon, or a combination thereof.

The second area 12 may be an area not coated with the active material C among the entire area of electrode plate 10. As an example, the second area 12 may be an area of an end portion of the electrode plate 10, which protrudes in a direction parallel to a second direction from the first area 11 among the entire area of electrode plate 10. The second direction may be a direction intersecting the first direction, for example, a direction perpendicular to the first direction and a vertical direction, that is, a direction from the first area 11 toward the second area 12 among directions parallel to a Y-axis based on FIG. 1.

The electrode plate 10 may further include a third area 13. The third area 13 may be an area not coated with the active material C in the electrode plate 10, excluding the second area 12. As an example, the third area 13 may be an area of another end portion of the electrode plate 10 positioned on a side opposite to the second area 12 among the entire area of electrode plate 10. The second area 12 and the third area 13 may be arranged to be spaced apart from each other in a direction parallel to the second direction.

Hereinafter, an example in which the electrode plate 10 includes the first area 11, the second area 12, and the third area 13 will be described. However, the electrode plate 10 is not limited thereto and may include only the first area 11 and the second area 12.

The upper body 200 forms an upper exterior of the notching apparatus for a secondary battery and may serve as a component for supporting the punch 500 which will be described below. The upper body 200 may be installed to vertically move above the lower body 100.

The upper body 200 may be moved downward after the electrode plate 10 is transferred as much as a set distance in the first direction. Thus, the upper body 200 may be configured such that a cutting operation in the second area 12, which will be described below, by the die 300, the punch hole 400, and the punch 500 at a time point when the transfer of the electrode plate 10 is stopped is performed.

The upper body 200 may include a first upper body 210 and a second upper body 220.

The first upper body 210 may be formed to have a rigid body shape with a substantially quadrangular cross-section. The first upper body 210 may be arranged above the lower body 100. The first upper body 210 may be connected to a separate power device (not shown) such as a press or a cylinder, and may be moved up and down in the vertical direction by a driving force generated from the power device.

A first guide post G1 may be installed between the first lower body 110 and the first upper body 210 to guide the up and down movement of the first upper body 210. The first guide post G1 may have a shape of a pillar whose longitudinal direction extends in the vertical direction. Upper and lower end portions of the first guide post G1 may be connected to the first lower body 110 and the first upper body 210. The first guide post G1 may have a telescopic structure whose length is variable by interlinking with the up and down movement of the first upper body 210. The first guide post G1 may be provided to be vertically separable as the first upper body 210 is moved upward a predetermined distance. A spring may be installed on the first guide post G1 to return the first upper body 210 to its initial position when an external force applied to the first upper body 210 is removed.

The first guide post G1 may be provided as plurality of first guide posts G1. The plurality of first guide posts G1 may be individually arranged at corners of the first lower body 110 and the first upper body 210.

The second upper body 220 may be arranged below the first upper body 210 and arranged to face the second lower body 120. A cross-sectional area of the second upper body 220 may be formed to be smaller than a cross-sectional area of the first upper body 210. The second upper body 220 may be fixed to the first upper body 210 through any of various coupling methods such as welding, bolting, and/or fit-coupling. When the first upper body 210 is moved up and down, the second upper body 220 may be moved up and down together with the first upper body 210. A lower surface of the second upper body 220 may have a flat shape parallel to the X-Y plane based on FIG. 1.

A second guide post G2 may be installed between the second lower body 120 and the second upper body 220 to guide the up and down movement of the second upper body 220. The second guide post G2 may have a shape of a pillar whose longitudinal direction extends in the vertical direction. Upper and lower end portions of the second guide post G2 may be connected to the second lower body 120 and the second upper body 220. The second guide post G2 may have a telescopic structure whose length is variable by interlinking with the up and down movement of the second upper body 220. The second guide post G2 may be provided to be vertically separable as the second upper body 220 moves up a predetermined distance. A spring may be installed on the second guide post G2 to return the second upper body 220 to its initial position when an external force applied to the second upper body 220 is removed.

The second guide post G2 may be provided as plurality of second guide posts G2. The plurality of second guide post G2 may be arranged at corners of the second lower body 120 and the second upper body 220.

The die 300 may be installed in the lower body 100, and at least a portion of the area of the die 300 may be arranged to face the second area 12. The die 300 may serve as a component for determining a processing shape of the second area 12 together with the punch hole 400, which will be described below.

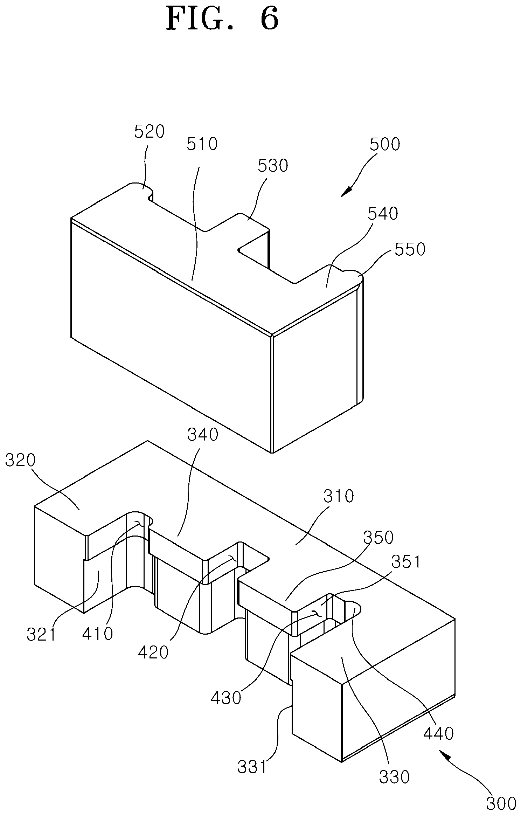

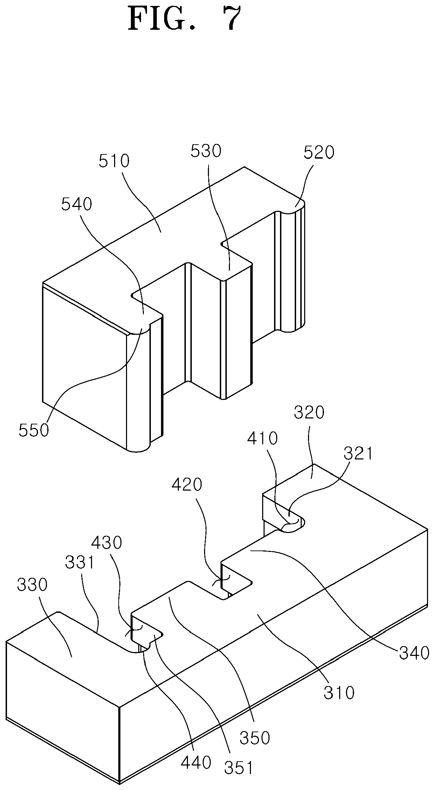

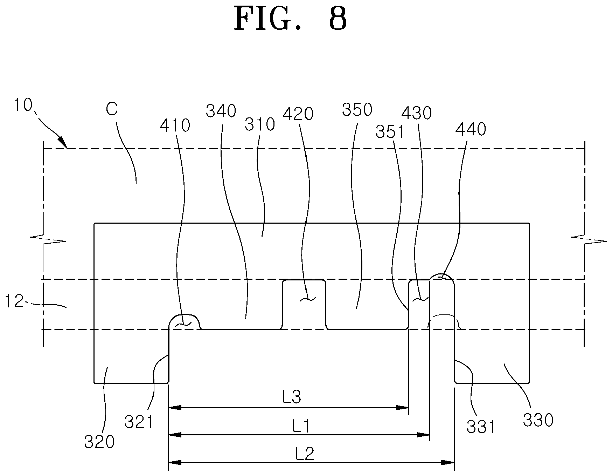

FIG. 6 is a schematic perspective view illustrating configurations of a die, a punch hole, and a punch according to an embodiment of the present disclosure, FIG. 7 is a perspective view illustrating the configurations of the die, the punch hole, and the punch according to an embodiment of the present disclosure from a viewpoint different from FIG. 6, and FIG. 8 is a schematic plan view illustrating the configuration of the die according to one embodiment of the present disclosure.

Referring to FIGS. 1 to 8, the die 300 may include a die body 310, a first extension 320, a second extension 330, a first tab support 340, and a second tab support 350.

The die body 310 may be fixed to the lower body 100 and may overall support the first extension 320, the second extension 330, the first tab support 340, and the second tab support 350, which will be described below. The die body 310 may be arranged inside the second lower body 120. An upper surface of the die body 310 may be exposed to an external space of the second lower body 120 through the upper surface of the second lower body 120. The upper surface of the die body 310 may be positioned coplanar with the upper surface of the second lower body 120. A longitudinal direction of the die body 310 may be arranged parallel to the first direction. The upper surface of the die body 310 may be arranged to face the first area 11 of the electrode plate 10.

The first extension 320 and the second extension 330 may extend from both, or opposite, ends of the die body 310 in the second direction. Lengths of the first extension 320 and the second extension 330 parallel to the second direction may be the same. The first extension 320 and the second extension 330 may be sequentially arranged in the first direction. That is, the second extension 330 may be arranged at a position spaced a distance (e.g., a predetermined distance) from the first extension 320 in the first direction. The first extension 320 and the second extension 330 may be arranged inside the second lower body 120. Upper surfaces of the first extension 320 and the second extension 330 may be exposed to the external space of the second lower body 120 through the upper surface of the second lower body 120. The upper surfaces of the first extension 320 and the second extension 330 may be positioned coplanar with the upper surface of the die body 310. The upper surfaces of the first extension 320 and the second extension 330 may be arranged to face the second area 12 of the electrode plate 10.

The first extension 320 and the second extension 330 may include a first surface 321 and a second surface 331, respectively.

The first surface 321 may be a surface facing the second extension 330 among the entire peripheral surface of the first extension 320. The second surface 331 may be a surface facing the first surface 321 of the first extension 320 among the entire peripheral surface of the second extension 330. The second surface 331 may be spaced a distance (e.g., a predetermined distance) L2 from the first surface 321 in the first direction. The first surface 321 and the second surface 331 may be arranged to face each other in parallel.

The first tab support 340 and the second tab support 350 may be arranged between the first extension 320 and the second extension 330. The first tab support 340 and the second tab support 350 may serve as components for determining a shape of an electrode tab formed in the second area 12 of the electrode plate 10 when the punch 500, which will be described below, is operated. The first tab support 340 and the second tab support 350 may each extend from the die body 310 in the second direction. The first tab support 340 and the second tab support 350 may be sequentially arranged in the first direction. That is, the first tab support 340 may be arranged at a position spaced a distance (e.g. a predetermined distance) from the first extension 320 in the first direction, and the second tab support 350 may be arranged at a position spaced a distance (e.g. a predetermined distance) from the first tab support 340 in the first direction.

Lengths of the first tab support 340 and the second tab support 350 parallel to the second direction may be smaller than the lengths of the first extension 320 and the second extension 330 parallel to the second direction. The lengths of the first tab support 340 and the second tab support 350 parallel to the second direction may be the same. Widths of the first tab support 340 and the second tab support 350 parallel to the first direction may be the same.

The second tab support 350 may include a third surface 351.

The third surface 351 may be a surface facing the second surface 331 among the entire peripheral surface of the second tab support 350. The third surface 351 may be spaced a predetermined distance from the second surface 331 in a direction opposite to the first direction. The second surface 331 and the third surface 351 may be arranged to face each other in parallel.

The punch hole 400 is formed by passing through the die 300 and may serve as a component for determining an area to be cut by the punch 500, which will be described below, in the second area 12 of the electrode plate 10.

The punch hole 400 may include a first punch hole 410, a second punch hole 420, and a third punch hole 430.

The first punch hole 410, the second punch hole 420, and the third punch hole 430 may be formed to have a shape of a groove that is concavely recessed from an outer surface of the die body 310 in a direction opposite to the second direction. Longitudinal directions of the first punch hole 410, the second punch hole 420, and the third punch hole 430 may be arranged parallel to the second direction. Upper and lower end portions of the first punch hole 410, the second punch hole 420, and the third punch hole 430 may each pass through the upper and lower surfaces of the die body 310. The first punch hole 410, the second punch hole 420, and the third punch hole 430 may be sequentially arranged in the first direction.

The first punch hole 410 may be arranged between the first extension 320 and the first tab support 340. A first surface of the first punch hole 410 facing the first extension 320 may be in contact with the first surface 321 of the first extension 320. Here, a first surface of the first punch hole 410 being in contact with the first surface 321 of the first extension 320 may mean that one surface of the first punch hole 410 is positioned coplanar with the first surface 321 of the first extension 320.

The second punch hole 420 may be arranged between the first tab support 340 and the second tab support 350.

The third punch hole 430 may be arranged between the second tab support 350 and the second extension 330. One surface of the third punch hole 430 facing the second extension 330 may be in contact with the second surface 331 of the second extension 330. A second surface of the third punch hole 430 facing the second tab support 350 may be in contact with the third surface 351 of the second tab support 350.

As described above, the electrode plate 10 may be transferred (e.g., gradually transferred) as much as a distance (e.g. a set distance) L1 in the first direction. In this case, the distance L1 may be smaller than a gap between the first punch hole 410 and the third punch hole 430. More specifically, the distance L1 may be smaller than the distance (e.g. gap) L2 between the first surface 321 and the second surface 331, which are in contact with the first surfaces of the first punch hole 410 and the third punch hole 430, respectively. In addition, the distance L1 may be greater than a distance (e.g., gap) L3 between the first surface 321 and the third surface 351 in contact with the second surface of the third punch hole 430. Since the punch hole 400 partially overlaps different sections of the second area 12 cut by the punch 500, the consumption efficiency of the electrode plate 10 can be improved, and cutting quality can be further improved.

A width of the third punch hole 430 parallel to the first direction may be greater than a width of the first punch hole 410 parallel to the first direction. In addition, a length of the first punch hole 410 parallel to the second direction may be smaller than a length of the third punch hole 430. Thus, since the punch hole 400 reduces a size of a portion pre-cut by the first punch hole 410 in the second area 12 facing the third punch hole 430 and maintains both end portions of the second area 12 facing the third punch hole 430 in a state of being connected to the remaining second area 12, when the punch 500 is operated, sticking can be prevented or substantially prevented from occurring in the second area 12 facing the third punch hole 430.

The punch hole 400 may further include a notching hole 440.

The notching hole 440 may have a shape of a groove concavely extending from the third punch hole 430 to an inside of the die body 310 in a direction parallel to the second direction. A width of the notching hole 440 parallel to the first direction may be smaller than the width of the third punch hole 430. The width of the notching hole 440 may be formed to be decrease (e.g. gradually decrease) toward an end portion thereof. A first surface of the notching hole 440 may be arranged in contact with the second surface 331 of the second extension 330. An upper end portion and a lower end portion of the notching hole 440 may pass through the upper surface and the lower surface of the die body 310, respectively. The notching hole 440 may serve as a component for dividing the electrode plate 10 into different sections every distance L1. Thus, after the operation of the notching apparatus for a secondary battery is completed, the notching hole 440 can further improve the ease of a process of cutting the electrode plate 10 every distance L1.

The punch 500 is installed in the upper body 200 and may be moved up and down with the upper body 200. The punch 500 may be inserted into the punch hole 400 as the upper body 200 moves downward to cut the second area 12 and may form electrode tabs on the electrode plate 10.

The punch 500 may include a punch body 510, a first punch 520, a second punch 530, and a third punch 540.

The punch body 510 may be fixed to the upper body 200 and may overall support the first punch 520, the second punch 530, the third punch 540, and a notching punch 550, which will be described below. The punch body 510 may be fixed to the lower surface of the second upper body 220 through any of various coupling methods such as welding, bolting, and/or fit-coupling. A longitudinal direction of the punch body 510 may be arranged parallel to the first direction. A lower surface of the punch body 510 may be arranged to face a space between the first extension 320 and the second extension 330. The punch body 510 may be inserted into the space between first extension 320 and second extension 330 when the upper body 200 moves downward. Thus, a length of the punch body 510 may correspond to the distance (e.g. gap) L2 between the first surface 321 and the second surface 331 or may be smaller than the distance (e.g. gap) L2 between the first surface 321 and the second surface 331.

The first punch 520, the second punch 530, and the third punch 540 may protrude from the punch body 510 in a direction opposite to the second direction. When the upper body 200 moves downward, the first punch 520, the second punch 530, and the third punch 540 may be formed to have shapes and positions that are inserted into the first punch hole 410, the second punch hole 420, and the third punch hole 430, respectively. That is, cross-sectional shapes of the first punch 520, the second punch 530, and the third punch 540 may be the same as cross-sectional shapes of the first punch hole 410, the second punch hole 420, and the third punch hole 430.

The punch 500 may further include the notching punch 550. The notching punch 550 may protrude from the punch body 510 in a direction opposite to the second direction. When the upper body 200 moves downward, the notching punch 550 may be formed to have a shape and a position that are inserted into the notching hole 440.

The notching apparatus 1 for a secondary battery according to the present embodiment may further include a sub die 610, a sub punch hole 620, and a sub punch 630.

The sub die 610 may be installed in the lower body 100 and arranged to face the third area 13. The sub die 610 may serve as a component for determining a processing shape of the third area 13 together with the sub punch hole 620 which will be described below.

The sub die 610 may include a sub die body 611, a first sub extension 612, and a second sub extension 613.

The sub die body 611 may be fixed to the lower body 100 and may overall support the first sub extension 612 and the second sub extension 613, which will be described below. The sub die body 611 may be arranged inside the second lower body 120. The sub die body 611 may be arranged to be spaced apart from the die body 310 in a direction parallel to the second direction. An upper surface of the sub die body 611 may be exposed to the external space of the second lower body 120 through the upper surface of the second lower body 120. The upper surface of the sub die body 611 may be positioned coplanar with the upper surface of the second lower body 120. A longitudinal direction of the sub die body 611 may be arranged parallel to the first direction. The upper surface of the sub die body 611 may be arranged to face the third area 13 of the electrode plate 10.

The first sub extension 612 and the second sub extension 613 may extend from both, or opposite, ends of the sub die body 611 in a direction opposite to the second direction. Lengths of the first sub extension 612 and the second sub extension 613 parallel to the second direction may be the same. The first sub extension 612 and the second sub extension 613 may be sequentially arranged in the first direction. That is, the first sub extension 612 may be arranged at a position spaced a distance (e.g. a predetermined distance) from the second sub extension 613 in the first direction. The first sub extension 612 and the second sub extension 613 may be arranged inside the second lower body 120. Upper surfaces of the first sub extension 612 and the second sub extension 613 may be exposed to the external space of the second lower body 120 through the upper surface of the second lower body 120. The upper surfaces of the first sub extension 612 and the second sub extension 613 may be positioned coplanar with the upper surface of the die body 310. The upper surfaces of the first sub extension 612 and the second sub extension 613 may be arranged to face the third area 13 of the electrode plate 10. A gap between the first sub extension 612 and the second sub extension 613 may be the same as the distance (e.g. gap) L2 between the first surface 321 of the first extension 320 and the second surface 331 of the second extension 330.

The sub punch hole 620 is formed by passing through the sub die 610 and may serve as a component for determining an area to be cut by the sub punch 630, which will be described below, in the third area 13 of the electrode plate 10. The sub punch hole 620 may be, for example, an empty space positioned between the first sub extension 612 and the second sub extension 613.

The sub punch hole 620 may include a sub notching hole 621.

The sub notching hole 621 may serve as a component for dividing the electrode plate 10 into different sections every distance (e.g. set distance) L1 together with the notching hole 440. The sub notching hole 621 may have a shape of a groove that is concavely recessed from the sub punch hole 620 toward an inside of the sub die body 611 in a direction parallel to the second direction. The sub notching hole 621 may be arranged at a position facing the notching hole 440 in a direction parallel to the second direction.

The sub punch 630 is installed in the upper body 200 and may be moved up and down together with the upper body 200. The sub punch 630 may be inserted into the sub punch hole 620 as the upper body moves downward and may completely cut the third area 13. The sub punch 630 may be fixed to the lower surface of the second upper body 220 through any of various coupling methods, such as welding, bolting, and/or fit-coupling. A longitudinal direction of the sub punch 630 may be arranged parallel to the first direction. A lower surface of the sub punch 630 may be arranged to face the sub punch hole 620. A length of the sub punch 630 may correspond to the gap between the first sub extension 612 and the second sub extension 613 or may be smaller than the gap between the first sub extension 612 and the second sub extension 613.

Hereinafter, operations of the notching apparatus 1 for a secondary battery according to one embodiment of the present disclosure will be described.

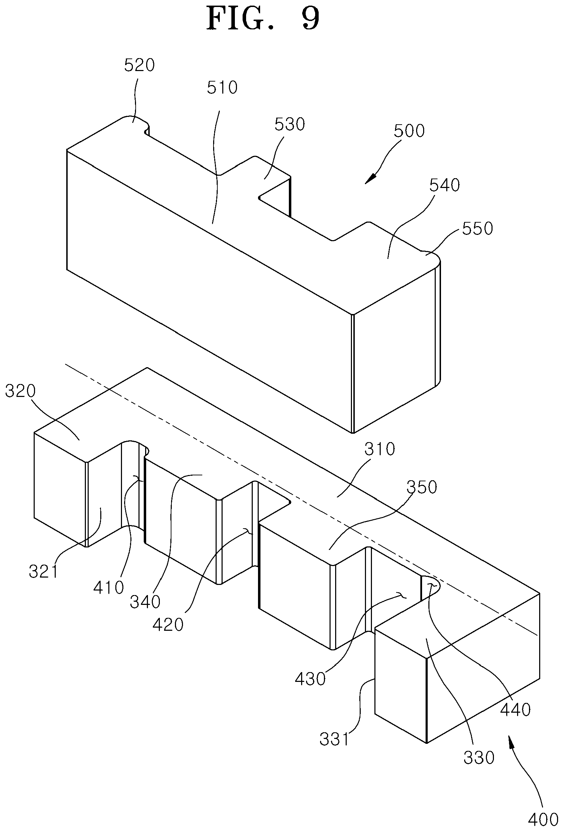

FIGS. 9 to 13 are schematic diagrams illustrating operations of the notching apparatus for a secondary battery according to one embodiment of the present disclosure.

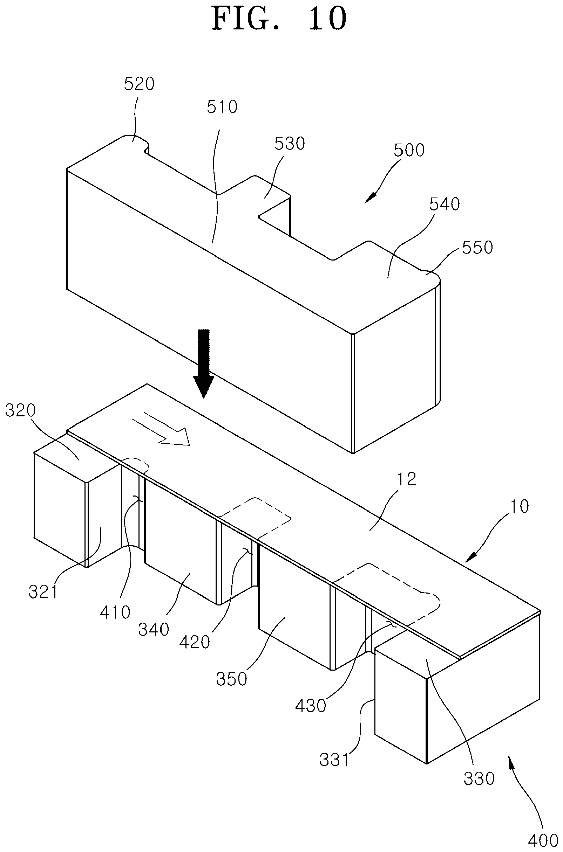

Referring to FIGS. 9 and 10, in a state in which the electrode plate 10 is positioned between the lower body 100 and the upper body 200, as the upper body 200 moves downward, the punch 500 is inserted into the inside of the punch hole 400 to cut the second area 12.

More specifically, the first punch 520, the second punch 530, the third punch 540, and the notching punch 550 of the punch 500 are inserted into the first punch hole 410, the second punch hole 420, the third punch hole 430, and the notching hole 440, respectively, and cut the second area 12 not facing the first tab support 340 and the second tab support 350 in the second area 12 positioned between the first extension 320 and the second extension 330.

Concurrrently (e.g. simultaneously), the sub punch 630 may be inserted into the sub punch hole 620 and cut the third area 13.

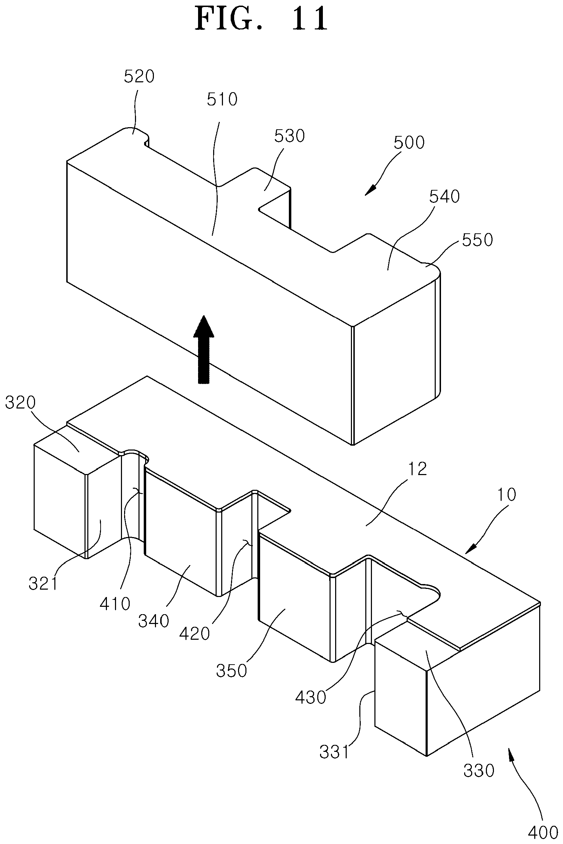

Referring to FIG. 11, after the second area 12 is cut, the punch 500 moves upward together with the upper body 200 and is separated from the punch hole 400.

Thereafter, the electrode plate 10 is moved as much as the set distance L1 in the first direction.

An end portion of the portion cut by the first punch hole 410 and the first punch 520 in FIG. 9 in the second area 12 positioned to face the third punch hole 430 is arranged in contact with and coplanar with the second surface 331 of the second extension 330.

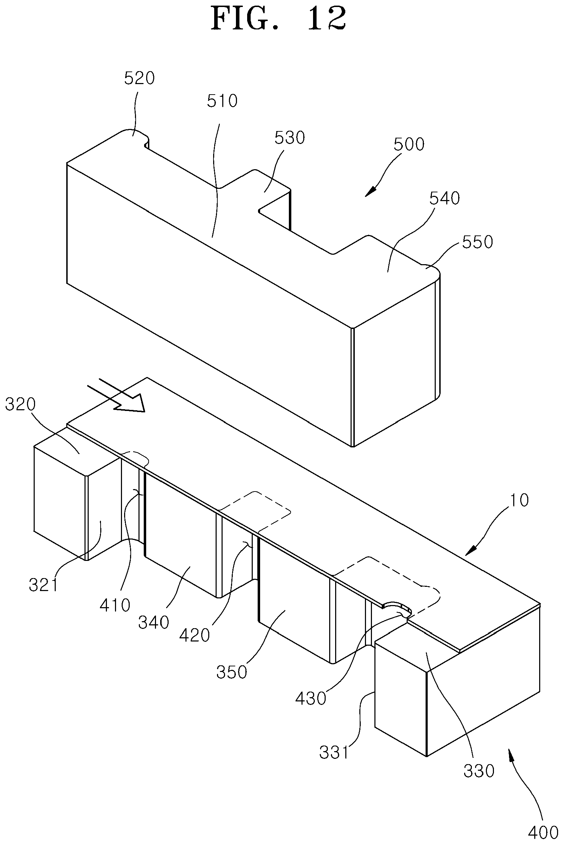

Referring to FIG. 12, as the upper body 200 moves downward, the punch 500 is inserted into the punch hole 400 and cuts the second area 12 in the same manner as in FIG. 9.

In this process, both ends of the second area 12, which are positioned to face the third punch hole 430, remain in a state of being connected to the second area 12 positioned to face the second extension 330 and the second tab support 350 such that the second area 12 may be cut smoothly without sticking.

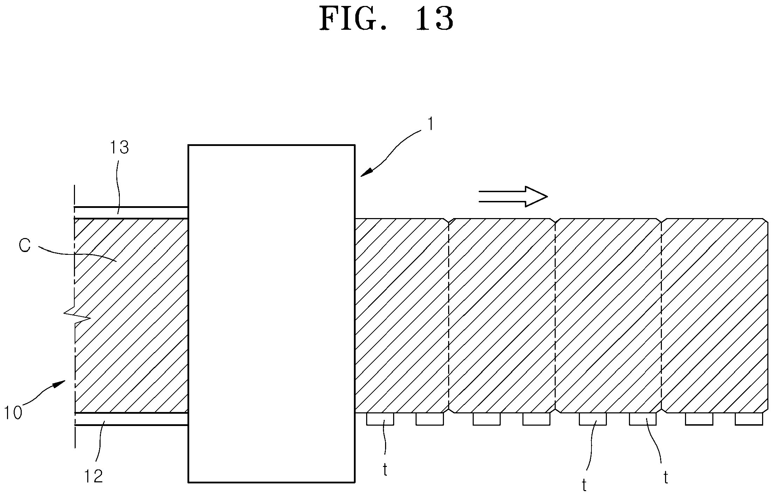

Referring to FIG. 13, as the operations of FIGS. 10 and 11 are repeatedly performed, a plurality of electrode tabs t may be formed at regular intervals in the second area 12 of the electrode plate 10, which has passed through the notching apparatus 1 for a secondary battery, and the third area 13 may be completely cut.

While the present disclosure has been described with reference to example embodiments shown in the drawings, these embodiments are merely illustrative and it should be understood that various modifications and equivalent other embodiments can be derived by those skilled in the art on the basis of the embodiments.

Therefore, the technical scope of the present disclosure should be defined by the appended claims.

Embodiments are set out in the following clauses:
Clause 1. A notching apparatus for a secondary battery, comprising: a lower body configured to support an electrode plate which comprises a first area coated with an active material and a second area not coated with the active material and is transferred in a first direction; an upper body installed to vertically move above the lower body; a die installed on the lower body and arranged to face the second area; a punch hole formed by passing through the die and comprising a first punch hole, a second punch hole, and a third punch hole which are sequentially arranged in the first direction; and a punch installed on the upper body, inserted into the punch hole as the upper body moves downward, and configured to cut the second area.
Clause 2. The notching apparatus of Clause 1, wherein the die includes: a die body fixed to the lower body; a first extension extending from the die body and comprising a first surface; a second extension extending from the die body and comprising a second surface arranged to face the first surface in the first direction; a first tab support arranged between the first extension and the second extension; and a second tab support arranged between the first extension and the second extension and spaced apart from the first tab support in the first direction.
Clause 3. The notching apparatus of Clause 2, wherein widths of the first tab support and the second tab support, which are parallel to the first direction, are the same.
Clause 4. The notching apparatus of Clause 2, wherein: longitudinal directions of the first extension, the second extension, the first tab support, and the second tab support extend in a second direction intersecting the first direction; and lengths of the first tab support and the second tab support are smaller than lengths of the first extension and the second extension.
Clause 5. The notching apparatus of Clause 2, wherein: the first punch hole is arranged between the first extension and the first tab support; the second punch hole is arranged between the first tab support and the second tab support; and the third punch hole is arranged between the second tab support and the second extension.
Clause 6. The notching apparatus of Clause 5, wherein: longitudinal directions of the first punch hole, the second punch hole, and the third punch hole are arranged parallel to a second direction intersecting the first direction; and a length of the first punch hole is smaller than a length of the third punch hole.
Clause 7. The notching apparatus of Clause 6, wherein a width of the third punch hole parallel to the first direction is greater than a width of the first punch hole parallel to the first direction.
Clause 8. The notching apparatus of Clause 6, wherein the upper body is moved downward after the electrode plate is transferred as much as a set distance in the first direction.
Clause 9. The notching apparatus of Clause 8, wherein the set distance is smaller than a gap between the first punch hole and the third punch hole.
Clause 10. The notching apparatus of Clause 9, wherein: one surface of the first punch hole is in contact with the first surface, and one surface of the third punch hole is in contact with the second surface; and the set distance is smaller than a gap between the first surface and the second surface.
Clause 11. The notching apparatus of Clause 10, wherein: the second tab support is arranged to face the first surface in the second direction and includes a third surface in contact with the other surface of the third punch hole; and the set distance is greater than a gap between the first surface and the third surface.
Clause 12. The notching apparatus of Clause 6, wherein the punch hole further includes a notching hole extending from the third punch hole in a direction parallel to the second direction.
Clause 13. The notching apparatus of Clause 12, wherein one surface of the notching hole is in contact with the second surface.
Clause 14. The notching apparatus of Clause 12, wherein a width of the notching hole is formed to become narrower in the second direction.
Clause 15. The notching apparatus of Clause 1, wherein: the electrode plate further includes a third area not coated with the active material and arranged on a side opposite to the second area; and the notching apparatus includes a sub die installed on the lower body and arranged to face the third area, a sub punch hole formed by passing through the sub die, and a sub punch installed on the upper body, inserted into the sub punch hole as the upper body moves downward, and configured to cut the third area.

## Claims

1. A notching apparatus for a secondary battery, the notching apparatus comprising:
a lower body configured to support an electrode plate which comprises a first area coated with an active material and a second area not coated with the active material, the electrode plate to be transferred in a first direction;
an upper body configured to vertically move above the lower body;
a die on the lower body and arranged to face the second area;
a punch hole passing through the die and comprising a first punch hole, a second punch hole, and a third punch hole sequentially arranged in the first direction; and
a punch on the upper body, insertable into the punch hole as the upper body moves downward, and configured to cut the second area.

2. The notching apparatus of claim 1, wherein the die comprises:
a die body fixed to the lower body;
a first extension extending from the die body and comprising a first surface;
a second extension extending from the die body and comprising a second surface arranged to face the first surface in the first direction;
a first tab support arranged between the first extension and the second extension; and
a second tab support arranged between the first extension and the second extension and spaced apart from the first tab support in the first direction.

3. The notching apparatus of claim 2, wherein widths of the first tab support and the second tab support, which are parallel to the first direction, are the same.

4. The notching apparatus of claim 2 or 3, wherein:
longitudinal directions of the first extension, the second extension, the first tab support, and the second tab support extend in a second direction intersecting the first direction; and
lengths of the first tab support and the second tab support are smaller than lengths of the first extension and the second extension.

5. The notching apparatus of claim 2, 3 or 4, wherein:
the first punch hole is arranged between the first extension and the first tab support;
the second punch hole is arranged between the first tab support and the second tab support; and
the third punch hole is arranged between the second tab support and the second extension.

6. The notching apparatus of any preceding claim, wherein:
longitudinal directions of the first punch hole, the second punch hole, and the third punch hole are parallel to a second direction intersecting the first direction; and
a length of the first punch hole is smaller than a length of the third punch hole.

7. The notching apparatus of any preceding claim, wherein a width of the third punch hole parallel to the first direction is greater than a width of the first punch hole parallel to the first direction.

8. The notching apparatus of claim 6 or 7, wherein the upper body is movable downward after the electrode plate is transferred as much as a distance in the first direction.

9. The notching apparatus of claim 8, wherein the distance is smaller than a gap between the first punch hole and the third punch hole.

10. The notching apparatus of claim 9, wherein:
a surface of the first punch hole is in contact with the first surface, and a surface of the third punch hole is in contact with the second surface; and
the distance is smaller than a gap between the first surface and the second surface.

11. The notching apparatus of claim 10, wherein:
the second tab support is arranged to face the second surface in the first direction and includes a third surface in contact with another surface of the third punch hole; and
the distance is greater than a gap between the first surface and the third surface.

12. The notching apparatus of any one of claims 6 to 11, wherein the punch hole further includes a notching hole extending from the third punch hole in a direction parallel to the second direction.

13. The notching apparatus of claim 12, wherein a surface of the notching hole is in contact with the second surface.

14. The notching apparatus of claim 12 or 13, wherein a width of the notching hole becomes narrower in the second direction.

15. The notching apparatus of any preceding claim, wherein:
the electrode plate further comprises a third area not coated with the active material and arranged on a side opposite to the second area; and
the notching apparatus further comprises a sub die on the lower body and arranged to face the third area, a sub punch hole passing through the sub die, and a sub punch on the upper body, insertable into the sub punch hole as the upper body moves downward, and configured to cut the third area.
